# EUROPEAN PATENT SPECIFICATION

(11) **EP 4 567 589 B1**
(45) Date of publication and mention of the grant of the patent: **09.09.2026**
(21) Application number: 23215313.0
(22) Date of filing: 08.12.2023
(51) Int. Cl.: G06F 8/65

(54) **TECHNIQUES FOR DEPLOYING SOFTWARE IN A VEHICLE**
VERFAHREN ZUM EINSATZ VON SOFTWARE IN EINEM FAHRZEUG
TECHNIQUES DE DÉPLOIEMENT DE LOGICIEL DANS UN VÉHICULE

(43) Date of publication of application: 11.06.2025
(73) Proprietor: Aptiv Technologies AG, 8200 Schaffhausen (CH)
(72) Inventor: SUCHY, Pawel, 8200 Schaffhausen (CH)
(74) Representative: Bardehle Pagenberg Partnerschaft mbB Patentanwälte Rechtsanwälte

(56) References cited:
- EP-A1- 4 242 834
- NAYAK NARESH ET AL: "Automotive Container Orchestration: Requirements, Challenges and Open Directions", 2023 IEEE VEHICULAR NETWORKING CONFERENCE (VNC), IEEE, 26 April 2023 (2023-04-26), pages 61 - 64, XP034354283, DOI: 10.1109/VNC57357.2023.10136278

## Description

### FIELD

The present disclosure generally relates to techniques for managing software in a vehicle. More specifically, the present disclosure relates to a method of deploying software in a vehicle comprising a plurality of electronic control units (ECU).

### BACKGROUND

Managing software in a vehicle is a relatively new feature which is not addressed well yet as it was not needed. As transition to software defined vehicle has begun there is a need to provide new features and security updates during entire vehicle lifetime. Vehicles are equipped with various electronic control units (ECUs) serving different purposes and being equipped with different software. This requires keeping the software of the ECUs up to date over the lifetime of the vehicle, as well as expanding the software, or correcting errors in the software.

Although several problem(s) in view of deployment and management of software into heterogeneous systems in vehicles and ensuring compatibility during update have been addressed by using orchestration (e.g., with Kubernetes), there are still some problems not addressed. For example, software may require the execution platform to provide specific resources to execute properly.

The subject disclosure addresses such drawbacks and provides for solutions to improve deployment and management of software in vehicles and ensure matching of available platform capabilities to capabilities requested by the software needs when installing/updating the software.

EP 4 242 834 A1 relates to a method performed by a vehicle system for handling configuration of a vehicle, focusing on managing, and in particular reconfiguring, vehicle network capabilities for service provision.

### SUMMARY

The subject disclosure is directed to improving management of software in a vehicle, including deployment, installation, and update. The main aspects are set out by the independent claims.

According to a first aspect of the subject disclosure, a computer-implemented method for deploying software in a vehicle is provided. The method comprises, at a controller of the vehicle: obtaining a set of capability information for each of a plurality of electronic control units (ECUs) of the vehicle, the set of capability information describing a capability of the ECU; in response to a container of the software being available for deployment, obtaining a set of requirement information of the container, the set of requirement information describing a required ECU capability, required by the container for deployment on one or more of the plurality of ECUs; and selecting a target ECU for deploying the container from the plurality of ECUs based on the sets of capability information and the set of requirement information so that the capability of the target ECU described by the set of capability information of the target ECU satisfies the required ECU capability described by the set of requirement information of the container.

In some examples of the first aspect, selecting the target ECU may comprise, at the controller, comparing the sets of capability information and the requirement information to determine the capability of the target ECU satisfying the required ECU capability.

In some examples of the first aspect, the requirement information may describe a minimum of the required ECU capability which the capability of the target ECU is to satisfy.

In some examples of the first aspect, the requirement information may comprise a runtime environment requirement indicating, as the required ECU capability, a runtime environment required by the container to run on the one or more of the plurality of ECUs and/or a resource requirement indicating, as the required ECU capability, a resource required on the one or more of the plurality of ECUs to run the container.

In some examples of the first aspect, the capability information may comprise a runtime environment capability indicating, as the capability, a runtime environment available at the ECU to run the container and/or a resource capability indicating, as the capability, a resource available at the ECU to run the container.

In some examples of the first aspect, the runtime environment may comprise information relating to one or more of an operating system, a software, a library, and a configuration parameter. In some examples of the first aspect, the resource may comprise information relating to one or more of a processor, a memory, a volume, a network device, an input/output device, and an accelerator.

In some examples of the first aspect, the computer-implemented method may further comprise, at the controller: determining availability of the container or an update for the container at a server over an over-the-air (OTA) connection; and downloading the container or the update from the server over the OTA connection.

In some examples of the first aspect, the computer-implemented method may further comprise, at the controller: verifying the container or the update; and storing the container in a local registry of the vehicle or updating the container in the local registry using the update to make the container available for deployment.

In some examples of the first aspect, the computer-implemented method may further comprise, at the controller: determining whether the vehicle is in a valid state allowing the container to be deployed; and delaying or proceeding, based on the valid state, to select the target ECU.

In some examples of the first aspect, the computer-implemented method may further comprise, at the controller: deploying the container to the target ECU for installation on the target ECU to deploy the software.

In some examples of the first aspect, the computer-implemented method may further comprise, at the target ECU: installing the container to deploy the software; verifying a state of installing the container on the target ECU; and responsive to a fail in verifying, uninstalling the container and recovering a previous version of the container.

In some examples of the first aspect, the plurality of ECUs comprises ECUs of different platforms, the different platforms comprising at least one of different hardware platforms, different operating systems, different virtual runtime environments, different application programming interfaces.

According to a second aspect of the subject disclosure, an apparatus for use in a vehicle is provided. The apparatus comprises a processor configured to perform one or more of the examples of the first aspect. For example, the processor may be configured to: obtain a set of capability information for each of a plurality of electronic control units (ECUs) of the vehicle, the set of capability information describing a capability of the ECU; in response to a container of the software being available for deployment, obtain a set of requirement information of the container, the set of requirement information describing a required ECU capability, required by the container for deployment on one or more of the plurality of ECUs; and select a target ECU for deploying the container from the plurality of ECUs based on the sets of capability information and the set of requirement information so that the capability of the target ECU described by the set of capability information of the target ECU satisfies the required ECU capability described by the set of requirement information of the container.

According to a third aspect, a computer program product is provided. The computer program product comprises instructions which, when executed by a computer, cause the computer to carry out one or more of the examples of the first aspect.

According to a fourth aspect, a computer-readable data carrier is provided. The computer-readable data carrier has stored thereon the computer program product of the third aspect.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings, and claims.

### BRIEF DESCRIPTION OF THE FIGURES

A better understanding of the subject disclosure can be obtained when the following detailed description of various exemplary embodiments is considered in conjunction with the accompanying drawings, in which:
FIG. 1 illustrates a vehicle with various electronic components according to one embodiment of the subject disclosure.
FIG. 2 illustrates a block diagram for the various electronic components of the vehicle shown in FIG. 1 according to one embodiment of the subject disclosure.
FIG. 3 illustrates a block diagram of an orchestration system in the vehicle shown in FIG. 1 according to one embodiment of the subject disclosure.
FIG. 4 illustrates a method for deploying software in a vehicle according to one embodiment of the subject disclosure.
FIG. 5 illustrates structures to be used in the method for deploying software in a vehicle according to one embodiment of the subject disclosure.
FIG. 6 illustrates a flow diagram corresponding to aspects of the method for deploying software in a vehicle according to one embodiment of the subject disclosure.
FIG. 7 illustrates another flow diagram corresponding to aspects of the method for deploying software in a vehicle according to one embodiment of the subject disclosure.
FIG. 8 is a diagrammatic representation of internal components of a computing system implementing the functionality as described herein.

### DETAILED DESCRIPTION

Before explaining the exemplary embodiments of the subject disclosure in more detail, certain general principles relating to the subject disclosure are briefly explained to assist in understanding the technology underlying the described examples.

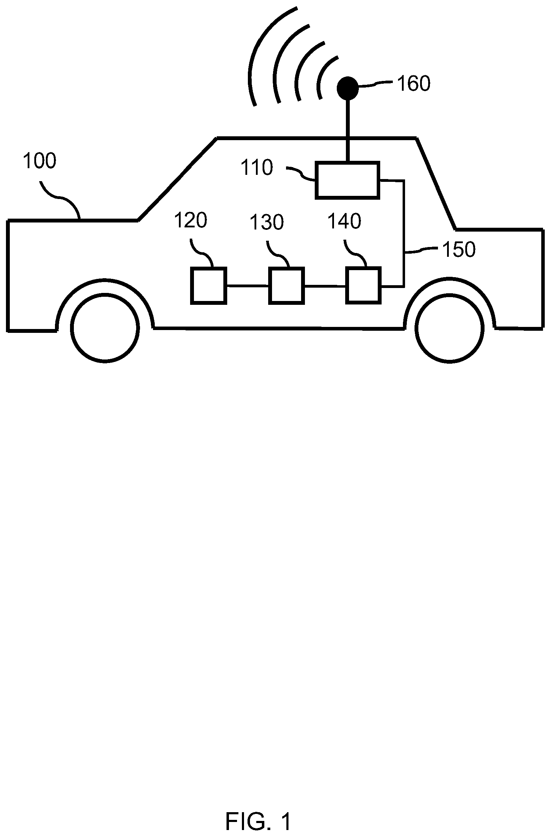

FIG. 1 illustrates a vehicle 100 with various electronic components according to one embodiment of the subject disclosure. For example, a passenger car is shown. However, any other vehicle may also be considered as vehicles. Examples of other vehicles comprise buses, commercial vehicles, especially trucks, agricultural machines, construction machines, motorcycles, rail vehicles, other moving systems such as storage lifters, etc. The subject disclosure is generally applicable to land vehicles, rail vehicles, water vehicles, and aircraft. The use is primarily intended for the field of vehicles. However, use in the field of field bus, i.e., in automation technology, process technology, etc., may also be considered.

In the vehicle 100, a plurality of electronic control units (ECUs) is used to control various functions of the vehicle 100. The vehicle 100 comprises an interconnection 150 to interconnect the ECUs and other electronic components of the vehicle 100 such as sensors, displays, user interfaces, or the like. The ECUs 120, 130, 140 are to control one or more of the electrical systems or subsystems in the vehicle 100. The vehicle further comprises a controller 110. The controller 110 is to control one or more of the ECUs 120, 130, 140. The controller 110 may comprise, or is connected to, a wireless communication module (not shown) for communicating over an over-the-air (OTA) interface 160.

Examples of the ECUs 120, 130, 140 may comprise at least one of: engine control module (ECM), powertrain control module (PCM), transmission control module (TCM), brake control module (BCM or EBCM), central control module (CCM), central timing module (CTM), general electronic module (GEM), body control module (BCM), suspension control module (SCM), or the like.

The ECUs of the vehicle 100 such as the ECUs 120, 130, 140 may be represented by separate computers. In some examples, an assembly of an ECU includes several individual control modules (e.g., a PCM often controls both the engine and the transmission). The controller 110 executes, e.g., the settings for the center of mass, inertia, axles, steering, brakes, tires, powertrain (engine, clutch, gearbox, retarder, driveline), driving aids, safety aids, or the like.

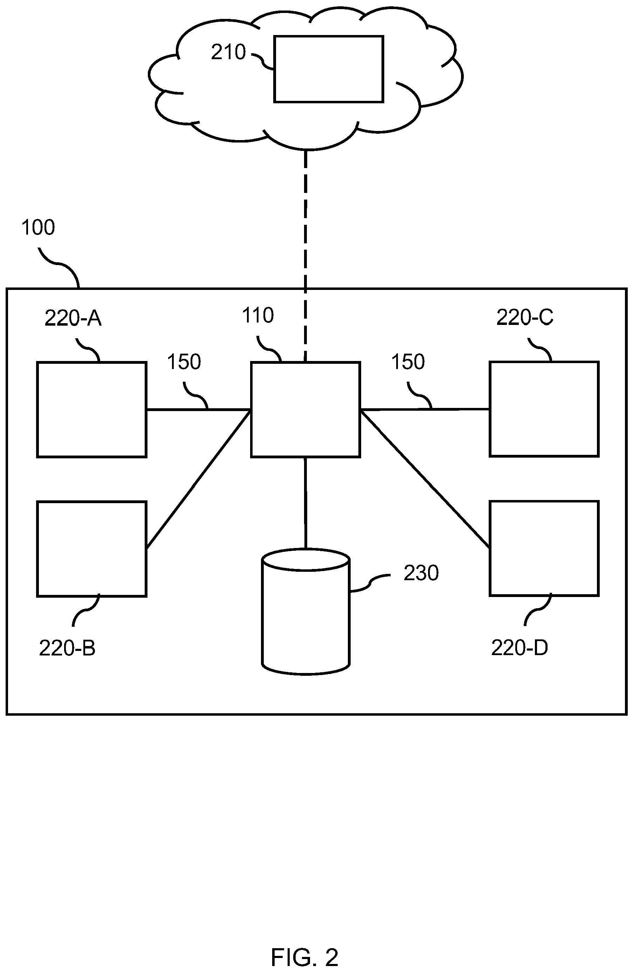

FIG. 2 illustrates a block diagram for the various electronic components of the vehicle 100 shown in FIG. 1 according to one embodiment of the subject disclosure.

The vehicle 100 comprises a controller 110 (e.g., a central controlling, a main controlling unit), a plurality of ECUs 220, and a local registry 230. For ease of illustration, four ECUs 220-A to 220-D being representative for the plurality of ECUs 220 are shown in FIG. 2. The controller 110 and the plurality of ECUs 220 are connected to each other via an interconnection 150. The interconnection 150 may comprise any type of wired or wireless connection, including a serial connection, a bus, or a network (e.g., a local area network). The local registry 230 may also be connected to the interconnection 150 or may be directly coupled to the controller 110 via any type of local connection (e.g., UART, USB, etc.). The controller 110 have also be connected, via a wireless communication module (e.g., an OTA interface) to an OTA server 210. The OTA server 210 may be a server at the Internet.

In some examples, the controller 110 may be a Linux-based computing system acting as a containerized central node or orchestration node.

The term "orchestration" as referred to herein is understood in the established meaning in the field of system administration. Accordingly, orchestration concerns automated configuration, coordination, and management of computer systems and software. Exemplary tools for orchestration include Kubernetes and AWS CloudFormation. In other words, the controller 110 configures, coordinates, and manages the plurality of ECUs 220 and the software of the plurality of ECUs 220.

The term "software" as referred to herein relates to all types of software required for a vehicle-based computing system, ranging from, e.g., software for basic input output systems (BIOS), firmware, hardware specific code, hardware drivers, protocol software, application software, or the like. In other words, the term "software" relates to instructions or commands, which when executed by any kind of computing or processing device, causes the computing or processing device to perform operations associated with the instructions or commands. In this regard, the term "software" also comprises software routines, software modules, software libraries, software components, or the like.

The plurality of ECUs 220 is used to control various functions of the vehicle 100, as described above. Typically, the plurality of ECUs 220 comprises ECUs of different platforms. For example, different platforms may comprise at least one of different hardware platforms (e.g., Intel-based processors, ARM-based processors, etc.), different operating systems (e.g., Linux-based operating systems, Android-based operating systems, Unix/Posix-based operating systems, etc.), different virtual runtime environments (e.g., VMware-based environments, Java Virtual Machine-based environments, etc.), different application programming interfaces (e.g., Java, C, Python, etc.). The different platforms may also comprise different sets of platform as a service (PaaS) product using OS-level virtualization to deliver software in packages called containers.

In some examples, the plurality of ECUs 220 may comprise Linux-based ECUs and non-Linux-based ECUs computing system acting as containerized nodes. Some of the plurality of ECUs 220 may also comprise high-compute platforms.

In other words, the controller 110 and the plurality of ECUs 220 may support, or implement, OS-level virtualization (i.e., containerization). The OS-level virtualization is known as an operating system (OS) virtualization paradigm in which the kernel of the OS allows the existence of multiple isolated user space instances, called e.g. containers. Such instances may look like real computers from the point of view of programs running therein. A computer program running on an ordinary OS (e.g., Linux, etc.) typically sees all resources (connected devices, files and folders, network shares, CPU power, quantifiable hardware capabilities) of that computer. Programs running inside of a container typically only see the container's contents and devices assigned to the container.

Accordingly, the term "container" as referred herein is understood in the established meaning in the field of computer virtualization. As such, the containers encompassed by the subject disclosure are a functional and portable cloud or non-cloud computing environment surrounding the application and which is independent of other environments. A container may contain one or more different software application(s) and run isolated processes by bundling together related configuration files, libraries, and dependencies. Containers may remove much of the complexity around deploying, installing, and configuring software. Containers are therefore particularly suitable for automotive environments where installation of a certain software or software components is desired to be independent of other software and software components and safe.

The local registry 230 may comprise any type of storage device for storing data such as software to be deployed by the controller 110 to the plurality of ECUs 220, containers, updates, etc. Similarly, the OTA server 210 may comprise any type of server device (e.g., cloud server, web server, file server, e.g.) that provides software to be deployed to ECUs of a vehicle (e.g., vehicle 100), containers, updates, etc. The OTA server 210 allows to push the software towards the vehicle 100 (e.g., the controller 110 of the vehicle 100) or allows software to be pulled by the controller 110 of the vehicle 100.

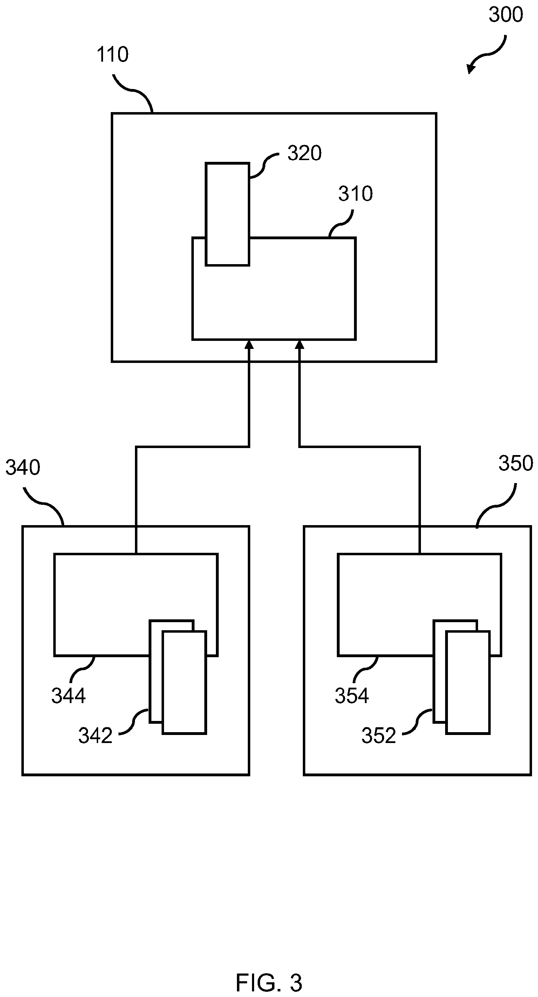

Turning now to FIG. 3, a block diagram of an orchestration system 300 in the vehicle 100 shown in FIG. 1 according to one embodiment of the subject disclosure will be described.

The orchestration system 300 includes the controller 110, the plurality of ECUs 220 and the local registry 230 (not shown) as described above with reference to FIG. 2. For ease of illustration, two ECUs 340 and 350 being representative for the plurality of ECUs 220 are shown in FIG. 3. In some examples, the orchestration system may implement Kubernetes tools.

The controller 110 may represent a central or master node of the orchestration system (i.e., a containerized central node or orchestration node). For example, the controller 110 may be a Linux-based computing system comprising an orchestration scheduler 310 to control and schedule automated configuration, coordination, and management of the plurality of ECUs 220 and software running on said ECUs 220. An example of the orchestration scheduler 310 may comprise a Kubernetes scheduler.

The orchestration scheduler 310 may comprise one or more extensions implementing aspects according to embodiments of the subject disclosure. For example, as described below in more detail, the orchestration scheduler 310 may comprise an extension 342 to obtain and handle sets of capability information describing capabilities of the ECUs 220 of the vehicle 100, and an extension to obtain and handle sets of requirement information describing requirements of the software to enable that the software can be run on, or executed by, the ECUs 220.

The ECUs 340 and 350 may represent worker nodes of the orchestration system. For example, the ECU 340 may be a Linux-based computing system comprising an orchestration agent 344 for controlling configuration and management of the ECU 340 and the software running on the ECU 340 in accordance with the control by the controller 110. The ECU 350 may be a RTOS-based computing system comprising an abstract orchestration agent 354 for controlling configuration and management of the ECU 350 and the software running on the ECU 350 in accordance with the control by the controller 110.

The orchestration agent 344 and the abstract orchestration agent 354 may each comprise one or more extensions implementing aspects according to embodiments of the subject disclosure. For example, as described below in more detail, the orchestration agents 344 and the abstract orchestration agent 354 may each comprise an extension 352 to provide and handle sets of capability information describing capabilities of the respective ECU of the vehicle 100.

In some examples of the subject disclosure, the abstract orchestration agent (or abstract worker node agent) 354 is provided to allow adding non-Linux based nodes (e.g., RTOS) into the orchestration system of the vehicle 100 and thus into an in-vehicle cluster, and the orchestration agent (or worker node agent) 344 is provided to allow adding Linux-based nodes into the orchestration system of the vehicle 100. The extension 352 may provide an abstract node capability description as the capability information, while the extension 342 may provide a node capability description as the capability information. The extensions of the orchestration agent 344, 354 may also comprise an orchestrator optimization client to optimize orchestration on the ECU.

In some examples of the subject disclosure, the extensions of the orchestration scheduler 310 may comprise an extension for configuration extended resource and runtime expectation for containers. The extension 342 is provided to consider nodes custom resources (i.e., obtain and handle sets of capability information describing capabilities of the ECUs of the vehicle).

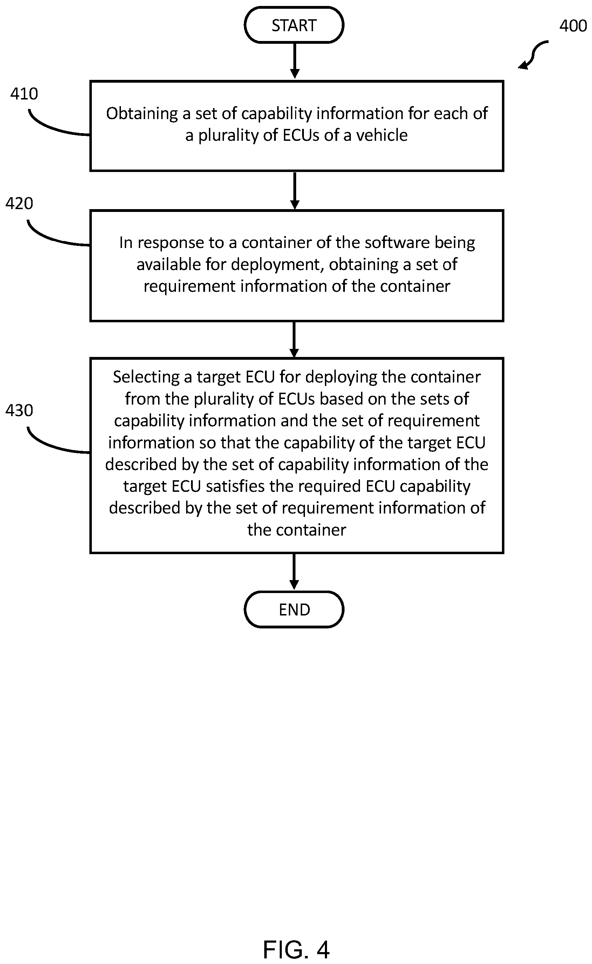

With reference to FIGS. 4 to 7, methods for deploying software in a vehicle according to embodiments of the subject disclosure will now be described.

FIG. 4 illustrates a method 400 for deploying software in a vehicle according to one embodiment of the subject disclosure.

The method 400 may be performed in a vehicle such as the vehicle 100 shown in FIG. 1. As described above, the vehicle 100 may comprise a plurality of ECUs such as the ECUs 120, 130, 140 and a controller 110. More specifically, the method 400 may be performed by the controller 110. Typically, the plurality of ECUs comprises ECUs of different platforms, as described above.

The method 400 begins by obtaining a set of capability information for the ECUs of the vehicle (block 410). The set of capability information describes at least one capability of the ECUs. More specifically, a set of capability information is obtained in block 410 for each of the ECUs connected and managed by a controller of the vehicle. According to the invention, as shown in FIG. 1, a set of capability information is obtained from each of the ECUs 120, 130, 140 by the controller 110.

For example, the set of capability information may comprise runtime environment capability information indicating, as a capability of the ECU, a runtime environment available at the ECU to run the software (e.g., a container). The runtime environment defines an environment in which the software can be executed, including a software platform for executing the software, an engine for compiling or interpreting the software, or the like. Exemplary runtime environment capability information indicating the runtime environment include information related to, or associated with, one or more of a software (e.g., an operating system, an application, a library, a firmware) running on, or provided by, the ECU, a configuration parameter (e.g., an access policy, a variable, a permission, a configuration of the software), data (e.g., system or user data, specific files or folders), and the like. For example, the runtime environment capability information for ECU 120 may include, among others, information that a Linux-based operating system is running on the ECU 120, information of a version of the kernel of the Linux-based operating system, information of whether the Linux-based operating system provides a real-time capability, information of applications such as an interpreter for a programming language (e.g., Python, C, Java, or the like) provided by the ECU 120, information of a library or module provided by the ECU 120, and information of a version or configuration of the library or the module.

In some examples, the set of capability information may additionally, or optionally, comprise a resource capability information indicating, as a capability of the ECU, a resource available at the ECU to run the software (e.g., the container). The resource typically defines one or more hardware resources of the ECU. Exemplary resource capability information indicating a resource include information related to, or associated with, one or more of a processor, a memory (e.g., a type or size of a main memory or at least a size of the main memory the ECU provides for running the software), a volume (e.g., a type or size of a storage device of the ECU or a device that is mounted on, or made available to, the ECU), a network device (e.g., a type or speed of a network device), an input/output device (e.g., a sensor or a display), and an accelerator (e.g., a graphics device). For example, the resource capability information for ECU 120 may include, among others, information that the ECU has a single processor including four cores, information of the type of the single processor (e.g., an ARM-based processor), information of total main memory (e.g., 8 gigabytes) and available main memory (e.g., 2 gigabytes), information of available storage space on a storage device (e.g., 8 gigabytes), information that a temperature sensor is connect to, or associated with, the ECU 120, and information that the ECU 120 provides a graphics processor and a network device.

In response to software to be deployed becomes available, the method 400 proceeds with obtaining a set of requirement information of the software (block 420). For example, the software (e.g., a container of the software) may be made available to the controller 110 of the vehicle for deployment to one or more of the ECUs 120, 130, 140. In response thereto, the controller 110 obtains a set of requirement information of the software at block 420. The set of requirement information describes one or more requirements of the software to enable that the software can be run on, or executed by, the ECUs. For example, the set of requirement information describes a required ECU capability required by the software (e.g., the container) for deployment on the ECUs. As shown in FIG. 1, a set of requirement information may be obtained by the controller 110 from the software (e.g., the container) made available for deployment to the ECUs 120, 130, 140.

For example, the requirement information comprises a runtime environment requirement information indicating, as a required ECU capability, a runtime environment required by the software (e.g., the container) to run on the ECUs. As described above, the runtime environment defines an environment which the software requires to be executed, including a software platform on which the software can be executed, an engine to compile or interpret the software, or the like. Exemplary runtime environment requirement information indicating the runtime environment include information related to, or associated with, one or more of a software (e.g., an operating system, an application, a library, a firmware) required by the software to be deployed to run on the ECU, a configuration parameter (e.g., an access policy, a variable, a permission, a configuration of the software), data (e.g., system or user data, specific files or folders), and the like. For example, the runtime environment requirement information for the software may include, among others, information that a Linux-based operating system is required for running the software and thus needs to be provided by e.g. the ECU 120, information of a version of the kernel of the Linux-based operating system, information of whether the Linux-based operating system requires to provide a real-time capability, information of applications such as an interpreter for a programming language (e.g., Python, C, Java, or the like) required by the software, information of a library or module required by the software, and information of a version or configuration of the library or the module.

In some examples, the set of requirement information may additionally, or optionally, comprise a resource requirement information indicating, as the required ECU capability, a resource required by the software (e.g., the container) to run on the ECU and thus a resource required to be available on the ECU to run the software. As described above, the resource typically defines one or more hardware resources of the ECU that the software requires to run on the ECU. Exemplary resource requirement information indicating a resource include information related to, or associated with, one or more of a processor, a memory (e.g., a type or size of a main memory or at least a size of the main memory), a volume (e.g., a type or size of a storage device of the ECU or a device that is mounted on, or made available to, the ECU), a network device (e.g., a type or speed of a network device), an input/output device (e.g., a sensor or a display), and an accelerator (e.g., a graphics device). For example, the resource requirement information for temperature-measuring software (for example) to be run on an ECU (e.g., ECU 120) may include, among others, information that the software requires at least one ARM-based processor, information that the software requires at least 2 gigabytes of main memory available for the software, information that the software requires a temperature sensor to be connected to, or associated with, the ECU 120, and information that the software requires a network device.

Typically, in some examples, the requirement information obtained in block 420 describes a minimum of the required ECU capability which the capability of an ECU (also referred to as target ECU) needs to satisfy in order for the software to be deployed to, and run on, the ECU. For example, the requirement information may describe that the software requires a minimum version of the kernel of the Linux-based operating system and/or a minimum of main memory.

In block 430, one or more ECUs (i.e., the target ECU or the target ECUs) for deploying the software are selected from among the plurality of ECUs. The selection is based on the sets of capability information obtained in block 810 and the set of requirement information obtained in block 820. More specifically, the selection is made such that the capability of the target ECU described by the set of capability information of the target ECU satisfies the required ECU capability described by the set of requirement information of the software. In other words, the set of capability information of the target ECU is to meet or comply with the set of requirement information of the software. For example, as shown in FIG. 1, the controller 110 may select the target ECU(s) from among the ECUs 120, 130, 140 based on the sets of capability information obtained in block 810 from the ECUs 120, 130, 140 and the set of requirement information obtained in block 820 from the software to be deployed.

In some examples, selecting the target ECU(s) may comprise that the sets of capability information and the requirement information are compared to determine the capability of the target ECU satisfying the required ECU capability. In other words, the controller 110 of the vehicle compares each of the sets of capability information obtained in block 810 from the ECUs 120, 130, 140 with the set of requirement information obtained in block 820 from the software to be deployed, thereby determining those sets of capability information of target ECU(s) that satisfy the set of requirement information of the software to be deployed.

For example, as described above, the requirement information may describe a minimum of the required ECU capability which the capability of the target ECU needs to satisfy in order for the software to be deployed to, and run on, the target ECU. In such examples, selecting the target ECU(s) comprises determining which of the sets of capability information of the ECUs of the vehicle satisfies the minimum requirement of the software to be deployed. For example, if the requirement information describes that the software requires a minimum version of the kernel of the Linux-based operating system and/or a minimum of main memory, the sets of capability information of the ECUs are determined of whether these sets include information related to an operating system of the ECU, information related to a version of the kernel of the operating system, and information of an available main memory. For each determined set, a comparison with respect to the requirement information of the software is made, including a comparison of the information related to the operating system of the ECU to the operating system (e.g., the Linux-based operating system) required by the software, a comparison of the information related to the version of the kernel of the operating system of the ECU to the minimum version of the kernel of the Linux-based operating system required by the software (e.g., to determine whether the version is equal to, or greater than the minimum version), and a comparison of the information of the available main memory of the ECU to the minimum of main memory required by the software (e.g., to determine whether the available main memory is equal to, or greater than the minimum of main memory).

According to one embodiment, the method 400 shown in FIG. 4 may further comprise determining availability of the software and downloading the software. For example, as described above, the software may include a container or an update for the container. The software may be made available at a location remote of the vehicle such as at a server on the Internet. The server may be accessible over an OTA connection. That is, the controller 110 of the vehicle 100 may determine availability of the container or the update for the container at the server over the OTA connection. In response to determining availability, the controller 110 may download the container or the update for the container from the server over the OTA connection. In other examples, the controller 110 may determine availability of the software (i.e., a new container or a new update for the container) at a storage device connected to the controller 110. Examples of connecting the storage device to the controller 110 include a local area network to which both the storage device and the controller 110 is connected or a serial connection such as a Universal Serial Bus (USB) connection via a corresponding serial interface of the controller 110. In such examples, the controller 110 may download the software from the storage device.

In some examples, the method 400 shown in FIG. 4 may further comprise verifying the software and storing the software in a local registry or updating the software in the local registry. For example, in response to downloading the software (i.e., the container or the update for the container), the controller 110 may verify the container or the update. For example, the controller 110 may calculate a checksum for the software using a hashing algorithm (e.g., MD5 message-digest algorithm or Secure Hash Algorithm (SHA)) and compare the calculated checksum against a checksum associated with the software (e.g., available at the server for download). The controller 110 may also verify whether the software is made available for the vehicle (e.g., the manufacturer of the vehicle or the model). The verification at the controller 110 may include any validation and verification processes necessary to ensure that the software can be deployed to ECUs of the vehicle. In response to verifying the container or the update, the controller 110 may store the container in the local registry of the vehicle (e.g., store the container on a storage device of the controller 110 or in a repository of the vehicle) or update the container in the local registry using the update. That is, the container already available at the vehicle (i.e., an older or previous version of the container) is updated using the update for the container (i.e., a newer version of the container). For example, the older or previous version of the container may be replaced by the newer version of the container (i.e., the update) or the older or previous version of the container may be combined with the newer version of the container (e.g., a differential update or patch for the container). In response to storing or updating, the controller 110 may again check the software stored at the local registry (e.g., by verifying the checksum).

According to other embodiment, the method 400 shown in FIG. 4 may further comprise determining whether the vehicle is in a valid state allowing the software to be deployed and delaying or proceeding, based on the valid state, to select the target ECU(s). For example, the valid state allowing the software to be deployed may correspond to a state of the vehicle (e.g., a maintenance state, non-driving state, or safe-driving state) allowing the software to be deployed while ensuring operability of the vehicle and meeting safety requirements. In some examples, the controller 110 may determine whether the vehicle is in the valid state by determining parameters of the vehicle that define a state of the vehicle and comparing these parameters to prescribed parameters indicating the valid state (e.g., determining whether the velocity of the vehicle is zero).

According to other embodiment, the method 400 shown in FIG. 4 may further comprise deploying the software to the selected ECU(s) (i.e., the target ECU). For example, the software may be deployed to the selected ECU(s) for installation of the software on the selected ECU(s), update software at the selected ECU(s) using the software to deploy, replacement of software on the selected ECU(s) by the software to deploy. For example, the controller 110, in response to selecting the target ECU(s), may deploy the software (e.g., the container or the container updated using the update of the container) to the target ECU(s) by transmitting the software to the target ECU(s) and executing a routine to install the software on the selected ECU(s), update the software of the selected ECU(s), or the like. The controller 110 may also again verify the software on the selected ECU(s), as described above, before deploying the software on the target ECU(s).

In some examples, the method 400 shown in FIG. 4 may further comprise installing the software (i.e., the container) and verifying a state of installing the software. For example, in response to installing the software at the target ECU(s), the controller 110 and/or the target ECU(s) may verify the installation by performing health checks to determine whether the software was installed and can be run on the target ECU(s) without errors. In response to the state indicating a failure (i.e., verifying the state of installing fails), the software may be uninstalled, and a previous version of the software may be recovered. For example, the controller 110 and/or the target ECU(s) may perform a recovery procedure to uninstall the software installed at the target ECU(s) and recover the previous version of the software (e.g., from a backup stored at the target ECU(s) or the controller 110) or by deploying the previous version of the software to the target ECU(s). Once the state of installing indicate success, the software (i.e., the container) is deployed to the target ECU(s).

The method 400 allows to achieve a highly flexible and scalable software-defined vehicle platform, guarantee safe and reliable software deployment (e.g., installation or update) in the vehicle, and ensure software compatibility during deployment. More specifically, once software is available for deployment, the method 400 allows to select ECUs which satisfy requirements of the software and thus on which the software can be deployed, thereby achieving flexibility as the ECUs to which to deploy the software is selected in an "on-demand"-like manner. In some examples, the method 400 also allows to monitor software health and manage recovery.

According to one embodiment of the subject disclosure, an electronic component representing the controller 110 shown in FIG. 1 is configured to perform examples of the method 400 as described above. More specifically, the electronic component may comprise a processor and a memory storing instructions, which when executed by the processor, cause the processor to perform one or more of the operations of these examples. For example, the electronic component may comprise the orchestration scheduler including extensions, as described above, to perform the one or more of the operations. In some examples, the electronic component may also comprise circuitry configured to perform one or more of the operations of these examples.

Accordingly, the electronic component may obtain the set of capability information for each of the plurality of ECUs of the vehicle (i.e., a capability of the ECU), in response to a container of the software being available for deployment (e.g., in the local registry), obtaining the set of requirement information of the container (i.e., a required ECU capability, required by the container for deployment on one or more of the plurality of ECUs), and select a target ECU for deploying the container from the plurality of ECUs. The selection may be based on the sets of capability information and the set of requirement information so that the capability of the target ECU described by the set of capability information of the target ECU satisfies the required ECU capability described by the set of requirement information of the container.

The electronic component may also compare the sets of capability information and the requirement information to determine the capability of the target ECU satisfying the required ECU capability.

The requirement information may comprise a runtime environment requirement indicating, as the required ECU capability, a runtime environment required by the container to run on the one or more of the plurality of ECUs and/or a resource requirement indicating, as the required ECU capability, a resource required on the one or more of the plurality of ECUs to run the container. The requirement information may be handled by the extension 320 as shown in Fig. 3.

An exemplary structure of the requirement information (also referred to as container manifest) for a particular container expecting a shared memory device on the worker node may be as follows. The exemplary structure may be obtained by the electronic device (e.g., the orchestration scheduler) from the container (i.e., sample container) of the software available for deployment on one or more worker nodes.

```
     apiVersion: v1
     kind: Pod
     metadata:
       name: sample-container
     spec:
       containers:
         - name: sample-container-image
           image: "sample-container-image:v0.1"
       nodeSelector:
         device: "shared-memory-device"
```

As described above, the requirement information may describe a minimum of the required ECU capability which the capability of the target ECU is to satisfy. An exemplary structure of the requirement information describing a minimum of the required ECU capability may be as follows. More specifically, the exemplary structure describes a minimum of one CAN-bus device which the target ECU needs to provide.

```
     apiVersion: v1
     kind: Pod
     metadata:
       name: sample-container-image
     spec:
       containers:
         - name:
           image: "sample-container-image:v0.1"
        resources :
             limits :
                   canbus-hardware-canl: 1
```

The capability information may comprise a runtime environment capability indicating, as the capability, a runtime environment available at the ECU to run the container and/or a resource capability indicating, as the capability, a resource available at the ECU to run the container. The capability information may be handled by the extension 320 as shown in FIG. 3.

An exemplary structure of the capability information for a particular worker node may be as follows. The worker node indicating, as a resource capability, that the worker node comprises a shared memory device. The exemplary structure may be obtained by the electronic device (e.g., the orchestration scheduler) from the worker node.

```
     {
       "kind": Node,
       "metadata": {
         "name": "any-vehicle-node",
         "labels": {
           "device": "shared-memory-device"
          }
       }
     }
```

Another exemplary structure of the capability information may be as follows. The worker node indicating, as a resource capability, that the worker node comprises two CAN devices. The exemplary structure may be obtained by the electronic device (e.g., the orchestration scheduler) from the worker node.

```
     "kind": Node,
       "metadata": {
         "name": node-offering-canbus-hardware,
         env:
           - name: CAN_DEVICES
             value: "can1, can2'
```

In selecting the target ECU, the electronic component may compare the requirement information for the container of the software (e.g., using the manifest of the sample-container as shown above) and the capability information of worker nodes in the vehicle (e.g., using the manifests of the nodes as shown above) to determine the capability of the target ECU satisfying the required ECU capability. For example, the electronic component may determine whether one of the workers provide the capability information (e.g., device: "shared-memory-device") satisfying the requirement information for the container (e.g., device: "shared-memory-device").

In other examples, the electronic component may determine availability of the container or an update for the container at a server (e.g., the OTA server 210) and download the container or the update from the server. The electronic component may further verify the container or the update and store the container in a local registry (e.g., the local registry 230) of the vehicle or update the container in the local registry using the update to make the container available for deployment.

In some examples, the electronic component may determine whether the vehicle is in a valid state allowing the container to be deployed, and delaying or proceeding, based on the valid state, to select the target ECU. The electronic component may further deploy the container to the target ECU for installation on the target ECU to deploy the software.

According to one embodiment of the subject disclosure, an electronic control unit (ECU) of the vehicle representing one of the ECUs 120, 130, 140 shown in FIG. 1 is configured to cooperate with the controller 110 shown in FIG. 1 and perform examples of the method as described above. More specifically, the ECU may comprise a processor and a memory storing instructions, which when executed by the processor, cause the processor to perform one or more of the operations of these examples. For example, the ECU may comprise the (abstract) orchestration agent including extensions, as described above, to perform the one or more of the operations. In some examples, the ECU may also comprise circuitry configured to perform one or more of the operations of these examples.

Accordingly, the ECU provides the set of capability information for the ECU (i.e., a capability of the ECU) to the controller 110.

The capability information may comprise a runtime environment capability indicating, as the capability, a runtime environment available at the ECU to run a container and/or a resource capability indicating, as the capability, a resource available at the ECU to run the container. The capability information may be handled by the extension 320 as shown in FIG. 3.

Exemplary structures of the capability information for particular worker nodes are shown and discussed above. The worker nodes provide the structures to the orchestration scheduler.

In some examples, ECU selected by the controller as the target ECU may receive the container for installation on the ECU to deploy the software. The ECU may then install the container to deploy the software, verify a state of installing the container, and responsive to an error or failure in verifying (i.e., a fail), uninstall the container and recover a previous version of the container.

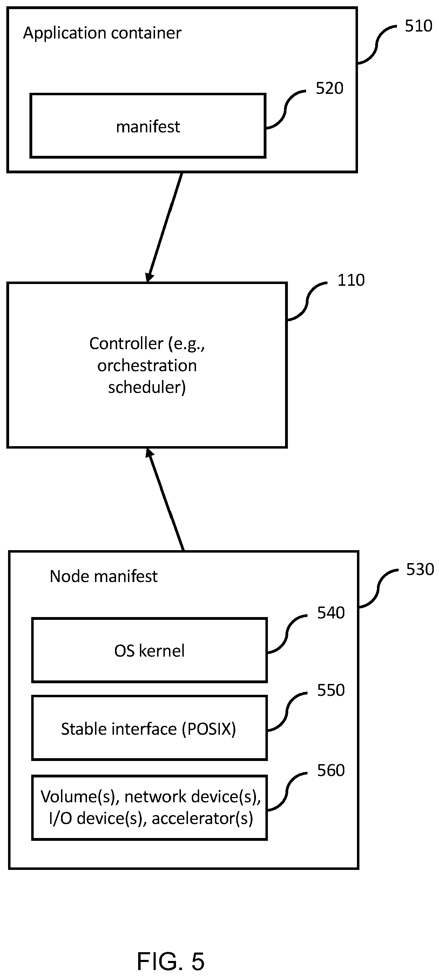

FIG. 5 illustrates structures to be used in the method 400 for deploying software in a vehicle according to one embodiment of the subject disclosure.

In FIG. 5, the controller 110 which may perform the method 400 is illustrated. As discussed above, the controller 110 obtains a set of capability information from ECUs of the vehicle and a set of requirement information of the software to be deployed.

In some examples, the software to be deploy may be represented by, or comprised in, an application container 510. The application container 510 may comprise one or more images of code representing the software, one or more software libraries required by the software. The application container 510 further comprises a manifest 520 representing or describing the set of requirement information of the software to be deployed. The set of requirement information describes one or more requirements of the software to enable that the software can be run on, or executed by, the ECUs of the vehicle. For example, the set of requirement information describes a required ECU capability required by the software (e.g., the container) for deployment. The manifest 520 may have the structure as described above.

For example, the requirement information may comprise a runtime environment requirement information indicating, as the required ECU capability, a runtime environment required by the software to run on the ECUs and/or a resource requirement information indicating, as the required ECU capability, a resource required by the software to run on the ECU.

In other words, the controller 110 obtains the manifest 520 from the application container 510 and determines the set of requirement information based on the manifest 520.

Similarly, the controller 110 obtains a node manifest 530 from each of the ECUs of the vehicle 100 and determines the set of capability information based on the node manifest 530. The node manifest 530 may have the structure as described above.

The set of capability information describes at least one capability of the ECU and is represented by or described in the node manifest 530. For example, the set of capability information may comprise runtime environment capability information indicating, as the capability of the ECU, a runtime environment available at the ECU to run the software and/or a resource capability information indicating, as the capability of the ECU, a resource available at the ECU to run the software. In the example shown in FIG. 5, the set of capability information may comprise information about the kernel of the operating system 540 running on the ECU, information about a stable interface (e.g., POSIX) 550 which the ECU provides to software, and/or information about hardware resources 560 of the ECU such as volume(s), network device(s), input/output (I/O) device(s), accelerator(s), etc.

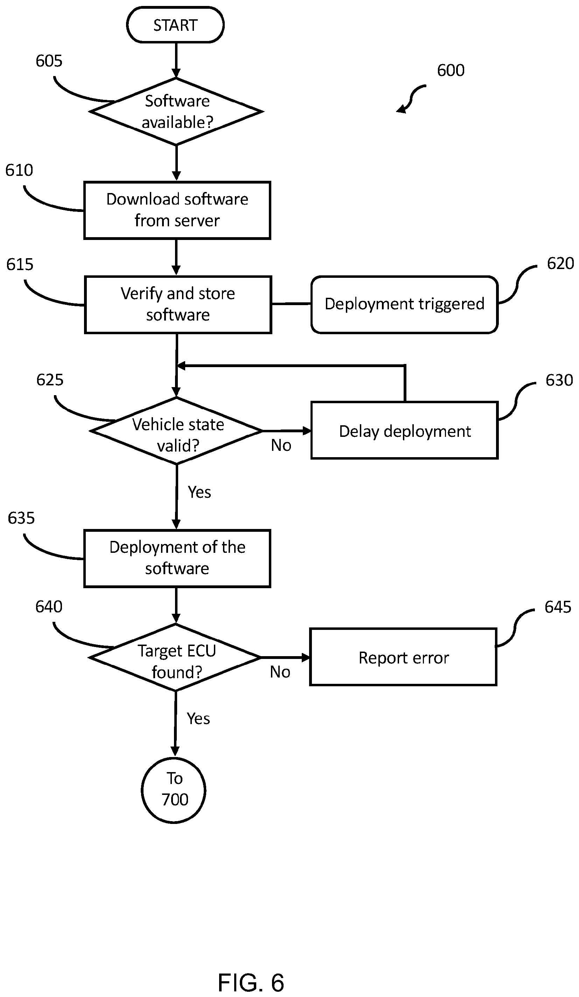

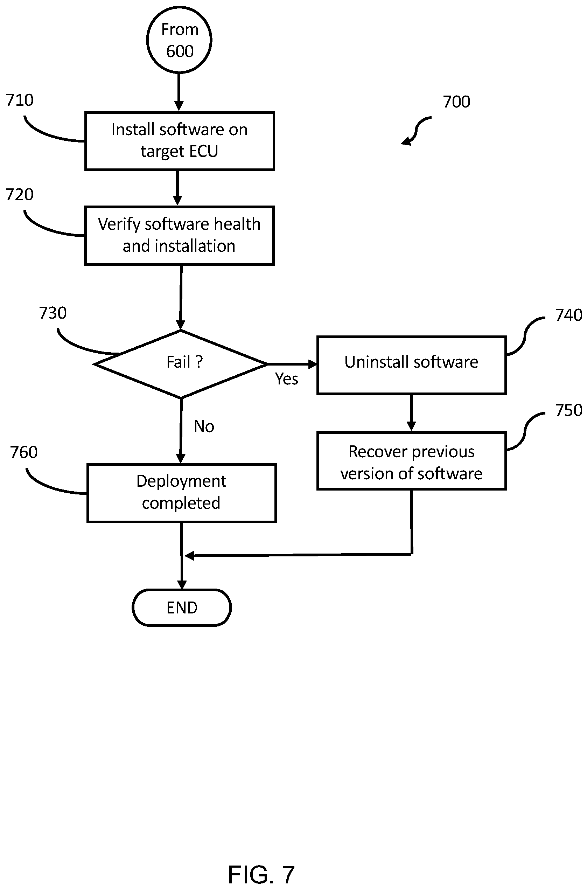

Turning now to FIGS. 6 and 7, flow diagrams illustrating aspects of the method 400 for deploying software in a vehicle according to one embodiment of the subject disclosure will be described.

The flow diagrams 600, 700 may be performed in a vehicle such as the vehicle 100 shown in FIG. 1. As described above, the vehicle 100 may comprise a plurality of ECUs such as the ECUs 120, 130, 140 and a controller 110.

First referring to the flow diagram 600 shown in FIG. 6, the controller 110 of the vehicle 100 may determine availability of new software to be deployed to the vehicle (e.g., a container of the software or an update for the container) at a server (e.g., OTA server 210) over an OTA connection (operation 605). For example, the controller 110 may determine that the new software is present in a repository of the server and that information indicates availability of the new software at the server. In some examples, the server may also indicate to the controller 110 that the new software is available at the server.

In response to determining availability of the new software to be deployed to the vehicle, the controller 110 may download the new software from the server over the OTA connection (operation 610). In other words, the controller 110 pulls the new software from the server. In some examples, the server may also push the new software to the controller 110.

In operation 615, the controller 110 may then verify the new software. For example, the controller 110 may verify a checksum of the new software. If the verification of the new software is successful, the controller 110 may store the new software in a local registry of the vehicle (e.g., the local registry 230 shown in FIG. 2) or update the software in the local registry using the new software. In some examples, the controller 110 may also install the new software in the local registry and configure data in the local registry (or another storage device). The availability of the new software at the controller 110 may trigger the deployment process to deploy (i.e., install or update) the new software to ECUs 120, 130, 140 of the vehicle 100 (operation 620).

The controller 110 may then determine whether the vehicle 100 is in a valid state allowing the new software to be deployed (operation 625). In response to determining that the vehicle 100 is not in a valid state, the controller 110 may delay the deployment process (operation 630) and thereby wait with deploying the new software. Once the vehicle 100 is in a valid state, the controller 110 may proceed with the deployment process and the operations to select one or more target ECUs to which to deploy the new software.

In operation 635, the controller 110 starts the deployment process to deploy the new software to ECUs 120, 130, 140 of the vehicle 100.

As part of this operation 635, the controller 110 obtains a set of capability information for the plurality ECUs of the vehicle 110 and obtains a set of requirement information of the new software. The set of capability information describes at least one capability of the ECUs, comprising runtime environment capability information indicating, as a capability of the ECU, a runtime environment available at the ECU to run the new software (e.g., a container), and/or resource capability information indicating, as the capability of the ECU, a resource available at the ECU to run the new software (e.g., the container). The set of requirement information describes one or more requirements of the new software to enable that the new software can be run on, or executed by, the ECUs, comprising a runtime environment requirement information indicating, as a required ECU capability, a runtime environment required by the new software (e.g., the container) to run on the ECUs, and/or a resource requirement information indicating, as the required ECU capability, a resource required by the new software (e.g., the container) to run on the ECU and thus a resource required to be available on the ECU to run the new software. In some examples, the controller may obtain a corresponding structure representing the set of capability information from each of the plurality ECUs of the vehicle 110 and a structure representing the set of set of requirement information from the new software.

Further, as part of the operation 635, the controller 110 selects one or more target ECUs from the plurality of ECUs based on the sets of capability information and the set of requirement information. The controller 110 selects an ECU as the target ECU if the controller 110 determines that the capability of the target ECU described by the set of capability information of the target ECU satisfies the required ECU capability described by the set of requirement information of the container. In some examples, the controller 110 may compare the sets of capability information and the requirement information to determine the capability of the target ECU satisfying the required ECU capability.

In case none of the plurality of ECUs satisfies the required ECU capability (operation 640), the controller 110 may report to the server (operation 645). For example, the controller 110 may report an error that the new software cannot be deployed to any of the ECUs of the vehicle 100. Otherwise, the controller 110 may deploy the new container to the one or more target ECUs for installation thereon. For example, the controller 110 may provide the new software to the one or more target ECUs and initiate the installation of the new software on the one or more target ECUs.

Now referring the flow diagram 700 shown in FIG. 7, each of the target ECUs may install the new software or update existing software using the new software (operation 710). Once the installation/update is completed, the target ECU may verify a state of installing/updating the new software on the target ECU (operation 720) and may report the state or a result of the verification to the controller 110. In some examples, responsive to a fail determined by the controller 110 based on the reported state or result of the verification (operation 730), the controller 110 may trigger a process of recovery on the target ECU including to uninstall the new software (operation 740) and recover a previous version of the software (operation 750). In other examples, in which the target ECU determines a fail (operation 730), the target ECU may uninstall the new software (operation 730) and recover the previous version of the software (operation 740) using a backup of the software or by retrieving the previous version of the software from the controller 110 or the local registry and installing the same. In case of a success (operation 730), the deployment process ends (operation 760) and the target ECU and/or the controller 110 may send a corresponding report to the server.

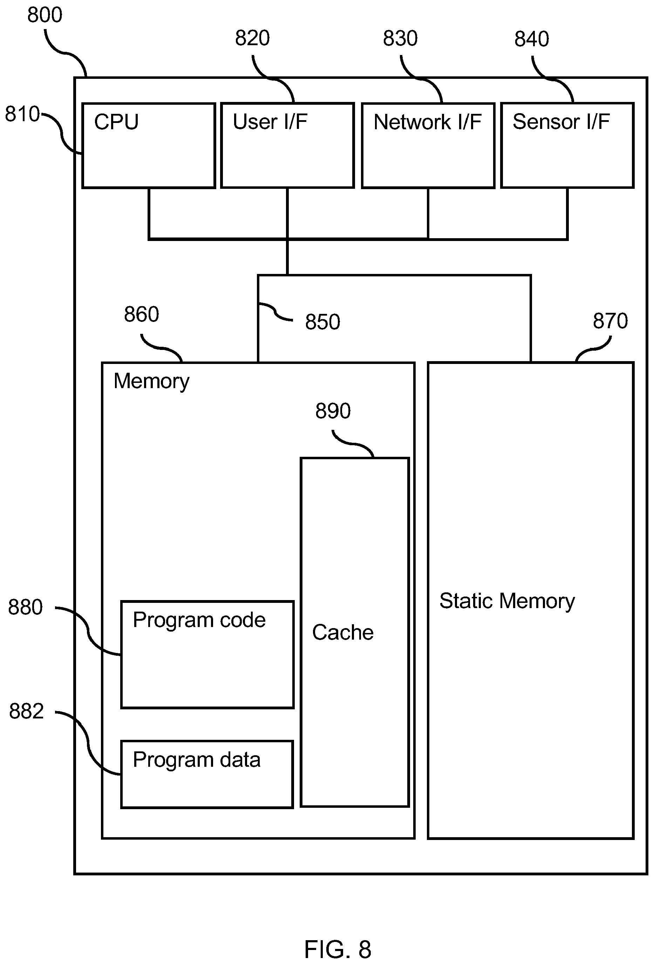

FIG. 8 is a diagrammatic representation of internal components of a computing system 800 implementing the functionality as described herein. For example, the computing system may represent the controller 110 shown in FIG. 1 and execute instructions to perform the method 400 shown in FIG. 4.

The computing system 800 may be in the vehicle and includes at least one processor 810, a user interface 820, a network interface 830 and a main memory 860, that communicate with each other via a bus 850. Optionally, the computing system 800 may further include a static memory 870 and a disk-drive unit (not shown) that also communicate with each via the bus 850. A video display, an alpha-numeric input device and a cursor control device may be provided as examples of the user interface 820.

Furthermore, the computing system 800 may also comprise a sensor interface 840 to communicate with a sensor of the vehicle. Alternatively, the computing system 600 may communicate with the sensor via the network interface 830. The sensor may be a radar sensor, a laser scanner, a light detection and ranging (LIDAR) sensor, or the like. The computing system 800 may also be connected to database systems (not shown) via the network interface 830, wherein the database systems store additional data needed for providing the functionalities as described herein. The network interface 830 also connects the computing system 800 to a vehicle bus (e.g., CAN or LIN) via which the computing system 800 communicates with other computing systems connected to the vehicle bus.

The main memory 860 may be a random-access memory (RAM) and/or any further volatile memory. The main memory 860 may store program code 880 for performing the exemplary method described herein. The memory 860 may also store additional program data 882 required for providing the functionalities as described herein. Part of the program data 882 and/or the program code 880 may also be stored in a separate, e.g., cloud memory and executed at least in part remotely, or in a cache 890.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the art. In particular, the examples are offered by way of illustrating the principles, and to provide a number of specific methods and arrangements for putting aspects of the subject disclosure into effect.

In certain embodiments, the functions and/or acts specified in the flow charts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the subject disclosure. It will be further understood that the terms "comprise" and/or "comprising," when used in this specification, specify the presence of stated features, integers, activities, operations, elements, and/or components, but do not preclude the presence or addition of one or more other features, integers, activities, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all the subject disclosure and while these embodiments have been described in considerable detail, it is not the intention to restrict or in any way limit the scope of the appended claims to such detail. Additional advantages and modifications will readily appear to those skilled in the art. The subject disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computer-implemented method for deploying software in a vehicle (100), comprising, at a controller (110) of the vehicle (100):
- obtaining (410), from each of a plurality of electronic control units, ECUs (120, 130, 140, 220, 340, 350) of the vehicle (100), a set of capability information, the set of capability information describing a capability of the respective ECU (120, 130, 140, 220, 340, 350);
- in response to a container (510) of the software being available for deployment, obtaining (420) a set of requirement information of the container (510), the set of requirement information describing a required ECU capability, required by the container (510) for deployment on one or more of the plurality of ECUs (120, 130, 140, 220, 340, 350); and
- selecting (430) a target ECU for deploying the container (510) from the plurality of ECUs (120, 130, 140, 220, 340, 350) based on the sets of capability information and the set of requirement information so that the capability of the target ECU described by the set of capability information of the target ECU satisfies the required ECU capability described by the set of requirement information of the container (510).

2. The computer-implemented method of claim 1, wherein selecting the target ECU comprises, at the controller (110):
- comparing the sets of capability information and the requirement information to determine the capability of the target ECU satisfying the required ECU capability.

3. The computer-implemented method of claim 2, wherein the requirement information describes a minimum of the required ECU capability which the capability of the target ECU is to satisfy.

4. The computer-implemented method of any one of claims 1 to 3, wherein the requirement information comprises a runtime environment requirement indicating, as the required ECU capability, a runtime environment required by the container (510) to run on the one or more of the plurality of ECUs (120, 130, 140, 220, 340, 350) and/or a resource requirement indicating, as the required ECU capability, a resource (560) required on the one or more of the plurality of ECUs (120, 130, 140, 220, 340, 350) to run the container (510).

5. The computer-implemented method of any one of claims 1 to 4, wherein the capability information comprises a runtime environment capability indicating, as the capability, a runtime environment available at the ECU (120, 130, 140, 220, 340, 350) to run the container (510) and/or a resource capability indicating, as the capability, a resource (560) available at the ECU (120, 130, 140, 220, 340, 350) to run the container (510).

6. The computer-implemented method of claims 4 or 5, wherein the runtime environment comprises information relating to one or more of an operating system (540), a software, a library, and a configuration parameter, and/or wherein the resource (560) comprises information relating to one or more of a processor (810), a memory (860, 870), a volume, a network device, an input/output device, and an accelerator.

7. The computer-implemented method of any one of claims 1 to 6, further comprising, at the controller (110):
- determining availability of the container (510) or an update for the container (510) at a server (210) over an over-the-air, OTA, connection; and
- downloading the container (510) or the update from the server (210) over the OTA connection.

8. The computer-implemented method of claim 7, further comprising, at the controller (110):
- verifying the container (510) or the update; and
- storing the container (510) in a local registry (230) of the vehicle (100) or updating the container (510) in the local registry (230) using the update to make the container (510) available for deployment.

9. The computer-implemented method of any one of claims 1 to 8, further comprising, at the controller (110):
- determining whether the vehicle (100) is in a valid state allowing the container (510) to be deployed; and
- delaying or proceeding, based on the valid state, to select the target ECU.

10. The computer-implemented method of any one of claims 1 to 9, further comprising, at the controller (110):
- deploying the container (510) to the target ECU for installation on the target ECU to deploy the software.

11. The computer-implemented method of claim 10, further comprising, at the target ECU:
- installing the container (510) to deploy the software;
- verifying a state of installing the container (510) on the target ECU; and
- responsive to a fail in verifying, uninstalling the container (510) and recovering a previous version of the container (510).

12. The computer-implemented method of any one of claims 1 to 11, wherein the plurality of ECUs (120, 130, 140, 220, 340, 350) comprises ECUs (120, 130, 140, 220, 340, 350) of different platforms, the different platforms comprising at least one of different hardware platforms, different operating systems (540), different virtual runtime environments, different application programming interfaces.

13. An apparatus for use in a vehicle (100), comprising a processor (810) configured to perform the method of any one of claims 1 to 12.

14. A computer program product comprising instructions which, when the computer program product is executed by one or more computers, cause the one or more computers to carry out the method of any one of claims 1 to 12.

15. A computer-readable data carrier having stored thereon the computer program product of claim 14.

## Patentansprüche

1. Ein computerimplementiertes Verfahren zum Bereitstellen von Software in einem Fahrzeug (100), umfassend, an einer Steuerung (110) des Fahrzeugs (100):
- Erhalten (410), von jeder einer Vielzahl von elektronischen Steuereinheiten, ECUs (120, 130, 140, 220, 340, 350) des Fahrzeugs (100), eines Satzes von Fähigkeitsinformation, wobei der Satz von Fähigkeitsinformation eine Fähigkeit der jeweiligen ECU (120, 130, 140, 220, 340, 350) beschreibt;
- als Reaktion darauf, dass ein Container (510) der Software zum Bereitstellen verfügbar ist, Erhalten (420) eines Satzes von Anforderungsinformation des Containers (510), wobei der Satz von Anforderungsinformation eine erforderliche ECU-Fähigkeit beschreibt, die von dem Container (510) zum Bereitstellen auf einer oder mehreren der Vielzahl von ECUs (120, 130, 140, 220, 340, 350) erforderlich ist; und
- Auswählen (430) einer Ziel-ECU zum Bereitstellen des Containers (510) aus der Vielzahl von ECUs (120, 130, 140, 220, 340, 350) basierend auf den Sätzen von Fähigkeitsinformation und dem Satz von Anforderungsinformation, so dass die Fähigkeit der Ziel-ECU, die durch den Satz von Fähigkeitsinformation der Ziel-ECU beschrieben wird, die erforderliche ECU-Fähigkeit erfüllt, die durch den Satz von Anforderungsinformation des Containers (510) beschrieben wird.

2. Das computerimplementierte Verfahren nach Anspruch 1, wobei das Auswählen der Ziel-ECU umfasst, an der Steuerung (110):
- Vergleichen der Sätze von Fähigkeitsinformation und der Anforderungsinformation, um die Fähigkeit der Ziel-ECU zu bestimmen, die die erforderliche ECU-Fähigkeit erfüllt.

3. Das computerimplementierte Verfahren nach Anspruch 2, wobei die Anforderungsinformation ein Minimum der erforderlichen ECU-Fähigkeit beschreibt, das die Fähigkeit der Ziel-ECU erfüllen soll.

4. Das computerimplementierte Verfahren nach einem der Ansprüche 1 bis 3, wobei die Anforderungsinformation eine Laufzeitumgebungsanforderung umfasst, die, als die erforderliche ECU-Fähigkeit, eine Laufzeitumgebung angibt, die von dem Container (510) erforderlich ist, um auf der einen oder den mehreren der Vielzahl von ECUs (120, 130, 140, 220, 340, 350) zu laufen, und/oder eine Ressourcenanforderung, die, als die erforderliche ECU-Fähigkeit, eine Ressource (560) angibt, die auf der einen oder den mehreren der Vielzahl von ECUs (120, 130, 140, 220, 340, 350) erforderlich ist, um den Container (510) zu betreiben.

5. Das computerimplementierte Verfahren nach einem der Ansprüche 1 bis 4, wobei die Fähigkeitsinformation eine Laufzeitumgebungsfähigkeit umfasst, die, als die Fähigkeit, eine Laufzeitumgebung angibt, die an der ECU (120, 130, 140, 220, 340, 350) verfügbar ist, um den Container (510) zu betreiben, und/oder eine Ressourcenfähigkeit, die, als die Fähigkeit, eine Ressource (560) angibt, die an der ECU (120, 130, 140, 220, 340, 350) verfügbar ist, um den Container (510) zu betreiben.

6. Das computerimplementierte Verfahren nach Anspruch 4 oder 5, wobei die Laufzeitumgebung Information umfasst, die sich auf eines oder mehrere von einem Betriebssystem (540), einer Software, einer Bibliothek und einem Konfigurationsparameter bezieht, und/oder wobei die Ressource (560) Information umfasst, die sich auf eines oder mehrere von einem Prozessor (810), einem Speicher (860, 870), einem Volumen, einer Netzwerkvorrichtung, einer Eingabe-/Ausgabevorrichtung und einem Beschleuniger bezieht.

7. Das computerimplementierte Verfahren nach einem der Ansprüche 1 bis 6, ferner umfassend, an der Steuerung (110):
- Bestimmen der Verfügbarkeit des Containers (510) oder einer Aktualisierung für den Container (510) an einem Server (210) über eine Over-the-Air-, OTA-, Verbindung; und
- Herunterladen des Containers (510) oder der Aktualisierung von dem Server (210) über die OTA-Verbindung.

8. Das computerimplementierte Verfahren nach Anspruch 7, ferner umfassend, an der Steuerung (110):
- Verifizieren des Containers (510) oder der Aktualisierung; und
- Speichern des Containers (510) in einem lokalen Register (230) des Fahrzeugs (100) oder Aktualisieren des Containers (510) in dem lokalen Register (230) unter Verwendung der Aktualisierung, um den Container (510) für die Bereitstellung verfügbar zu machen.

9. Das computerimplementierte Verfahren nach einem der Ansprüche 1 bis 8, ferner umfassend, an der Steuerung (110):
- Bestimmen, ob sich das Fahrzeug (100) in einem gültigen Zustand befindet, der es dem Container (510) ermöglicht, bereitgestellt zu werden; und
- Verzögern oder Fortfahren, basierend auf dem gültigen Zustand, die Ziel-ECU auszuwählen.

10. Das computerimplementierte Verfahren nach einem der Ansprüche 1 bis 9, ferner umfassend, an der Steuerung (110):
- Bereitstellen des Containers (510) an die Ziel-ECU zur Installation auf der Ziel-ECU, um die Software bereitzustellen.

11. Das computerimplementierte Verfahren nach Anspruch 10, ferner umfassend, an der Ziel-ECU:
- Installieren des Containers (510), um die Software bereitzustellen;
- Verifizieren eines Zustands des Installierens des Containers (510) auf der Ziel-ECU; und
- als Reaktion auf einen Fehler beim Verifizieren, Deinstallieren des Containers (510) und Wiederherstellen einer vorherigen Version des Containers (510).

12. Das computerimplementierte Verfahren nach einem der Ansprüche 1 bis 11, wobei die Vielzahl von ECUs (120, 130, 140, 220, 340, 350) ECUs (120, 130, 140, 220, 340, 350) verschiedener Plattformen umfasst, wobei die verschiedenen Plattformen mindestens eines von verschiedenen Hardwareplattformen, verschiedenen Betriebssystemen (540), verschiedenen virtuellen Laufzeitumgebungen, verschiedenen Anwendungsprogrammierschnittstellen umfassen.

13. Eine Vorrichtung zur Verwendung in einem Fahrzeug (100), umfassend einen Prozessor (810), der konfiguriert ist, um das Verfahren nach einem der Ansprüche 1 bis 12 durchzuführen.

14. Ein Computerprogrammprodukt, umfassend Anweisungen, die, wenn das Computerprogrammprodukt von einem oder mehreren Computern ausgeführt wird, den einen oder die mehreren Computer veranlassen, das Verfahren nach einem der Ansprüche 1 bis 12 auszuführen.

15. Ein computerlesbarer Datenträger, auf dem das Computerprogrammprodukt nach Anspruch 14 gespeichert ist.

## Revendications

1. Un procédé implémenté par calculateur pour le déploiement d'un logiciel dans un véhicule (100), comprenant, au niveau d'un contrôleur (110) du véhicule (100) :
- l'obtention (410), depuis chacune d'une pluralité d'unités de contrôle électroniques, ECU (120, 130, 140, 220, 340, 350) du véhicule (100), d'un ensemble d'informations de capacité, l'ensemble d'informations de capacité décrivant une capacité respective de l'ECU (120) ;
- en réponse au fait qu'un conteneur (510) du logiciel est disponible pour déploiement, l'obtention (420) d'un ensemble d'informations d'exigence du conteneur (510), l'ensemble d'informations d'exigence décrivant une capacité requise d'ECU, requise par le conteneur (510) pour déploiement sur une ou plusieurs de la pluralité d'ECU (120) ; et
- la sélection (430) parmi la pluralité d'ECU (120) d'une ECU cible pour le déploiement du conteneur (510), sur la base des ensembles d'informations de capacité de l'ensemble d'informations d'exigence, de manière que la capacité de l'ECU cible décrite par l'ensemble d'informations de capacité de l'ECU cible vérifie la capacité requise d'ECU décrite par l'ensemble d'informations d'exigence du conteneur (510).

2. Le procédé implémenté par calculateur de la revendication 1, dans lequel la sélection de l'ECU cible comprend, au niveau du contrôleur (110) :
- la comparaison des ensembles d'informations de capacité et des informations d'exigence pour déterminer que la capacité de l'ECU cible satisfait la capacité requise d'ECU.

3. Le procédé implémenté par calculateur de la revendication 2, dans lequel l'information d'exigence décrit un minimum de capacité requise d'ECU que la capacité de l'ECU cible doit vérifier.

4. Le procédé implémenté par calculateur de l'une des revendications 1 à 3, dans lequel l'information d'exigence comprend une exigence d'environnement de runtime indiquant, en tant que capacité requise d'ECU, un environnement de runtime requis par le conteneur (510) pour s'exécuter sur les une ou plusieurs de la pluralité d'ECU (120), et/ou une exigence de ressource indiquant, en tant que capacité requise d'ECU, une ressource (560) requise sur les une ou plusieurs de la pluralité d'ECU (120) pour faire s'exécuter le conteneur (510).

5. Le procédé implémenté par calculateur de l'une des revendications 1 à 4, dans lequel l'information de capacité comprend une capacité d'environnement de runtime indiquant, comme étant la capacité, un environnement de runtime disponible au niveau de l'ECU (120) pour faire s'exécuter le conteneur (510) et/ou une capacité de ressource indiquant, comme étant la capacité, une ressource (560) disponible au niveau de l'ECU (120) pour exécuter le conteneur (510).

6. Le procédé implémenté par calculateur des revendications 4 ou 5, dans lequel l'environnement de runtime comprend une information relative à un ou plusieurs parmi un système d'exploitation (540), un logiciel, une bibliothèque, et un paramètre de configuration, et/ou dans lequel la ressource (560) comprend une information relative à un ou plusieurs parmi un processeur (810), une mémoire (860, 870), un volume, un dispositif de réseau, un dispositif d'entrée/sortie, et un accélérateur.

7. Le procédé implémenté par calculateur de l'une des revendications 1 à 6, comprenant en outre, au niveau du contrôleur :
- la détermination de la disponibilité du conteneur (510) ou d'une mise à jour pour le conteneur (510) au niveau d'un serveur (210) par l'intermédiaire d'une connexion over-the-air, OTA ; et
- le téléchargement du conteneur (510) ou de la mise à jour depuis le serveur (210) par l'intermédiaire de la connexion OTA.

8. Le procédé implémenté par calculateur de la revendication 7, comprenant en outre, au niveau du contrôleur (110) :
- la vérification du conteneur (510) ou de la mise à jour ; et
- le stockage du conteneur (510) dans un registre local (230) du véhicule (100) ou la mise à jour du conteneur (510) dans le registre local (230) en utilisant la mise à jour pour rendre le conteneur (510) disponible pour un déploiement.

9. Le procédé implémenté par calculateur de l'une des revendications 1 à 8, comprenant en outre, au niveau du contrôleur (110) :
- la détermination si le véhicule (100) est ou non dans un état valide autorisant le conteneur (510) à être déployé ; et
- le retardement ou l'exécution, sur la base de l'état valide, de la sélection de l'ECU cible.

10. Le procédé implémenté par calculateur de l'une des revendications 1 à 9, comprenant en outre, au niveau du contrôleur (110) :
- le déploiement du conteneur (510) vers l'ECU cible pour installation sur l'ECU cible afin de déployer le logiciel.

11. Le procédé implémenté par calculateur de la revendication 10, comprenant en outre, au niveau de l'ECU cible :
- l'installation du conteneur (510) pour déployer le logiciel ;
- la vérification d'un état d'installation du conteneur (510) sur l'ECU cible ; et
- en réponse à un échec de la vérification, la désinstallation du conteneur (510) et la récupération d'une version antérieure du conteneur (510).

12. Le procédé implémenté par calculateur de l'une des revendications 1 à 11, dans lequel la pluralité d'ECU (120) comprend des ECU (120) de plateformes différentes, les plateformes différentes comprenant au moins l'une d'entre des plateformes matérielles différentes, des systèmes d'exploitation (540) différents, des environnements de runtime virtuel différents, des interfaces de programmation d'applications différentes.

13. Un appareil destiné à une utilisation dans un véhicule (100), comprenant un processeur (810) configuré pour mettre en œuvre le procédé de l'une des revendications 1 à 12.

14. Un produit de programme de calculateur comprenant des instructions qui, lorsque le produit de programme de calculateur est exécuté par un ou plusieurs calculateurs, font en sorte que les un ou plusieurs calculateurs mette en œuvre le procédé de l'une des revendications 1 à 12.

15. Un support de données lisibles par calculateur avec stocké dessus le produit de programme de calculateur de la revendication 14.
